# EUROPEAN PATENT SPECIFICATION

(11) **EP 0 420 223 B1**
(45) Date of publication and mention of the grant of the patent: **18.12.1996**
(21) Application number: 90118521.5
(22) Date of filing: 27.09.1990
(51) Int. Cl.: C08L 75/04

(54) **Chlorosulfonated polyolefin-modified polyurethane and polyurea compositions and process for making the same**
Chlorosulfoniertes Polyolefinmodifizierte Polyurethan- und Polyharnstoffzusammensetzungen und Verfahren zu ihrer Herstellung
Compositions de polyuréthane et polyurée modifiés par polyoléfine chlorosulfoné et procédé pour leur préparation

(30) Priority: 29.09.1989 US 415163
(43) Date of publication of application: 03.04.1991
(73) Proprietor: E.I. DU PONT DE NEMOURS AND COMPANY, Wilmington Delaware 19898 (US)
(72) Inventor: Brugel, Edward Gus, Wilmington, Delaware 19803 (US)
(74) Representative: von Kreisler, Alek, Dipl.-Chem.

(56) References cited:
- FR-A- 2 176 992
- JP-A-61 083 216
- JP-A-63 105 049

## Description

### BACKGROUND OF THE INVENTION

This invention relates to novel polyurethane and polyurea resin compositions containing chlorosulfonated olefin polymer blocks.

JP-A-63105049, abstracted in DATA base JAPS, discloses a chlorine-containing elastomer composition obtainable by compounding 50 to 95 wt % chlorine-containing elastomer, e.g. chlorosulfonated polyethylene with 5 to 50 wt % of a polyurethane vinyl chloride graft copolymer e.g. a copolymer having a polyurethane content of 10 to 90 %.

JP-A-61 083 216 (CA 105 (14) : 116002t) discloses water-absorbing, hydrophilic chlorosulfonated olefin polymer compositions obtained by reacting a chlorosulfonated polyolefin with a polyalkylene oxide having a primary amino group on at least one end and treating with a polyfunctional isocyanate compound having at least two isocyanate groups.

US-A-2 615 000 discloses the manufacture of sulfonamides by amidation of chlorosulfonated polyethylene. As amidating agents organic amines free of OH groups and any additional primary or secondary amino group are used, in order to avoid reaction of one amine molecule with two or more SO₂Cl groups of the same ethylene polymer or different molecules of the polymer.

Polyurethane resins have found widespread application in the manufacture of articles that must be tough, abrasion-resistant, and which must exhibit some degree of flexibility. However, the degradation which results when the resins are exposed to various environments has limited their usefulness. Chlorosulfonated polyolefins are widely known and widely used elastomers which exhibit excellent resistance to acids, bases, and solvents. They also exhibit a high degree of flexibility, ozone resistance, and general overall weatherability as well as reduced surface tension. These properties are derived from the presence of chlorine on the polymer backbone. It would be impractical to chlorinate polyurethanes or polyureas to try to improve their properties. However, it has now been found that when chlorosulfonated polyolefins are reacted with polyols and/or polyamines and the resultant intermediate is further reacted with polyisocyanates, polyurethane or polyurea resins are obtained which exhibit improvements in chemical resistance, flexibililty, and overall weathering while still retaining the desirable properties of polyurethanes and polyureas.

### SUMMARY OF THE INVENTION

This invention is directed to cured polyurethane or polyurea resin compositions having chlorosulfonated polyolefin blocks incorporated therein and to a process for preparing said resin compositions.

More specifically this invention is directed to a chlorosulfonated olefin polymer resin composition comprising the reaction product of:
a) 10-80% by weight, based on the weight of the resin, of a chlorosulfonated olefin polymer having a chlorine content of 20-60% by weight and a sulfur content of 0.5-10% by weight,
   wherein the chlorosulfonated olefin polymer is selected from chlorosulfonated homopolymers of C₂-C₈ alpha monoolefins and chlorosulfonated copolymers of ethylene and at least one ethylenically unsaturated monomer selected from C₃-C₁₀ alpha monoolefins,
b) at least 5% by weight, based on the weight of the resin, of a compound selected from
   - polyols selected from ethylene glycol, 1,2-propylene glycol, 1,3-propylene glycol, butanediols, pentanediols and trimethylolpropane,
   - polyamines selected from isophoronediamine, hexamethylenediamine, ethylenediamine, 1,4-cyclohexane-bis(methylamine), 1,2-diaminopropane, propylenediamine, trimethylhexamethylmethylenediamine, methanediamine, 4,4'-methylenebisaniline, triethylenetetramine, diethylaminopropylamine, diethylenetriamine, and N-aminoethylpiperazine,
   - and mixtures thereof,
   wherein the equivalent ratio of the compound to sulfur in the chlorosulfonated olefin polymer is greater than 1:1, and
c) at least 5% by weight, based on the weight of the resin, of a polyisocyanate.

In addition the invention is directed to a process according to claims 6 to 12 for preparing the above-described chlorosulfonated olefin polvmer resin compositions.

In the above embodiment of the process of this invention the reactants are each present at the initiation of the reaction. In another embodiment of the invention, the chlorosulfonated olefin polymer and the polyol, polyamine, or mixture thereof may be pre-reacted to form a sulfonate or sulfonamide intermediate which is subsequently reacted with the polyisocyanate. When a polyol alone, and not a mixture of polyol and polyamine, is present as a reactant in this embodiment a tertiary amine is present in the pre-reaction mixture in an amount of 0.1-2 equivalents per equivalent of sulfur present in the chlorosulfonated polyolefin resin. When a polyamine or mixture of polyol and polyamine is present in this embodiment, the use of a tertiary amine is optional.

In another embodiment of the invention a partially sulfonated or sulfonamidated chlorosulfonated olefin polymer derivative is formed by pre-reaction of a chlorosulfonated olefin polymer in which a portion of the reactive sulfonyl chloride groups of the chlorosulfonated olefin polymer have been derivatized or pre-reacted with a compound selected from the group consisting of monohydric alcohols and primary or secondary amines. The resultant partially sulfonated or sulfonamidated chlorosulfonated olefin polymer is subsequently contacted with the polyol, polyamine or mixtures thereof and the polyisocyanate to form a polyurethane or polyurea resin of the invention. The amount of derivatizing agent may range from 0.1 to 1 equivalents, per equivalent of sulfur present in the chlorosulfonated olefin polymer. Use of monohydric alcohols in excess, to act as both solvent and reactant, is also contemplated by the invention. Under such circumstances, wherein more than one equivalent of monohydric alcohol derivatizing agent is present per equivalent of sulfur in the chlorosulfonated polyolefin, the final reaction with polyol or polyamine and isocyanate is a transesterification or a transamidation. When using polyols alone rather than polyol/polyamine mixtures in this embodiment, a tertiary amine is present in amounts of 0.1-2 equivalents per equivalent of sulfur present in the chlorosulfonated polyolefin resin. The use of tertiary amines is optional when polyamines or polyamine/polyol mixtures are used.

Chlorosulfonated resin compositions are thus produced which are cured polyurethane or polyurea resins. These novel polyurethane or polyurea resin compositions have improved physical and chemical properties which are imparted to them by incorporation of chlorosulfonated olefin polymers into the final resin product by first reacting the sulfonyl chloride moieties on the chlorosulfonated olefin polymers with an excess of a polyhydroxylic or polyamino compound or mixture thereof, followed by reaction of the hydroxyl or amino group or groups remaining after the initial reaction with polyisocyanate. Depending on the particular chlorosulfonated polymer chosen and its amount relative to the urethane or urea components the chlorine content varies, thus influencing the final properties of chlorine-containing polyurethane or polyurea compositions of this invention. Use of chlorosulfonated polyolefins containing low levels of chlorine, 30-35 weight %, produces rubbery, non-crystalline blocks which can increase the toughness, elongation, and flexibility of the cured urethane or urea product. Higher chlorine levels, 50-60 weight %, increase the glass transition temperature of the chlorosulfonated olefin polymer block, thus increasing the hardness and the barrier properties of the final cured polyurethane or polyurea. Incorporation of the chlorosulfonated olefin polymer into the resin means that the polymer is chemically a part of the polyurethane or polyurea structure. As such the polymer forms a block or blocks in the structure, in the same manner as do the urethane resin components (derived from polyisocyanate and polyol) or urea components (derived from polyisocyanate and polyamine). The polyisocyanate and polyol or polyamine blocks correspond to the residues of these components after reaction to form the polyurethane or polyurea as the case may be. Thus, the resin compositions of the present invention are cured polyurethane or polyurea resin compositions having chlorosulfonated olefin polymers incorporated therein through sulfonate or sulfonamide linkages.

### DETAILED DESCRIPTION OF THE INVENTION

The urethane or urea resin compositions of the invention comprise blocks derived from chlorosulfonated olefin polymer, blocks derived from either (a) polyol to form a polyurethane resin or (b) polyamine to form a polyurea resin, and blocks derived from polyisocyanate. Said resins contain 10-80% by weight, based on the weight of the resin, of chlorosulfonated olefin polymer-derived blocks linked via sulfonate ester or sulfonamide groups, the polyol or polyamine-derived blocks comprising at least 5% by weight, based on the weight of the resin, and the polyisocyanate-derived blocks comprising at least 5% by weight, based on the weight of the resin. They are thus cured or crosslinked compositions.

The term chlorosulfonated olefin polymer as used herein means those chlorosulfonated olefin polymers which contain chlorine in amounts ranging from 20-60 weight % and sulfur in amounts ranging from 0.5-10 weight %, based on the weight of the chlorosulfonated olefin polymer. The chlorosulfonated olefin polymers may be selected from chlorosulfonated homopolymers of C₂-C₈ alpha monoolefins and chlorosulfonated copolymers of ethylene and at least one ethylenically unsaturated monomer selected from the group consisting of C₃-C₁₀ alpha monoolefins. These chlorosulfonated olefin polymers include chlorosulfonated polyethylene, chlorosulfonated polypropylene and chlorosulfonated copolymers of ethylene with propylene, butene, 3-methyl-1-pentene, or octene. A preferred chlorosulfonated olefin polymers is chlorosulfonated polyethylene.

The chlorosulfonated olefin polymers have average molecular weights within the range of 1,000 to 300,000. Those chlorosulfonated olefin polymers having average molecular weights of 1,000-50,000 are suitable for preparation of polyurethanes or polyureas for high solids coating applications, with the preferred average molecular weight being 5,000 to 10,000. Chlorosulfonated polyolefins having average molecular weights in the range of 50,000 to 300,000 are most suitable for preparation of polyurethanes or polyureas for adhesive and thermoset applications, with the preferred average molecular weight being 75,000 to 150,000.

The chlorosulfonated olefin polymers used to prepare the resins of the invention may be prepared by reacting an alpha monoolefin with a chlorosulfonating agent at temperatures of 80-100°C, usually in the presence of a free radical initiator and an inert solvent. A typical chlorosulfonating agent is sulfonyl chloride and a typical initiator is 2,2'-azobis(2-methylpropane nitrile). Various chlorosulfonated olefin polymers and methods for their preparation are discussed, for example, in U.S. -A- 2,586,363, and 3,296,222 and in EP-A-0163970.

The polyols used in the present invention have at least two hydroxyl groups per molecule and are selected from polyhydric alcohols. The polyhydric alcohols include various diols and triols such as ethylene glycol, 1,2-propylene glycol, 1,3-propylene glycol, butanediols, pentanediols and trimethylolpropane.

The term polyamine as used herein means those aliphatic and aromatic amines having two or more primary or secondary amino functionalities per molecule. Examples of polyamines that can be used to prepare the resin compositions of the present invention include, among others, isophoronediamine, hexamethylenediamine, ethylenediamine, 1,4-cyclohexanebis(methylamine), 1,2-diaminopropane, propylenediamine, trimethylhexamethylmethylenediamine, methanediamine, 4,4'-methylenebisaniline, triethylenetetramine, diethylaminopropylamine, diethylenetriamine, and N-aminoethylpiperazine. The preferred polyamine is isophoronediamine.

The polyisocyanates used in the present invention include monomeric polyisocyanates, such as toluene diisocyanate, ethylene diisocyanate, propylene diisocyanate, meta and para-phenylene diisocyanates, diphenylmethane 4,4'-diisocyanate, hexamethylene diisocyanate, isophorone diisocyanate and bis(4-isocyanatocyclohexyl)methane. Polymeric isocyanates can also be used in the present invention, such as those derived from the reaction of toluene diisocyanate and trimethylolpropane. The particular polyisocyanate employed is not critical, but diisocyanates are preferred, and of these the trimers of toluene diisocyanate and of hexamethylene diisocyanate are preferred.

The resins are prepared by the general procedure of contacting the chlorosulfonated olefin polymer and an amount of polyol, polyamine, or mixture thereof with a polyisocyanate. The preparation may be carried out at ambient temperatures and pressures or at elevated temperatures and pressure, and one skilled in the art will be able to adjust the reaction conditions to control the rate of reaction through routine experimentation. The number of equivalents of polyol or polyamine must be greater than the number of equivalents of sulfur present in the chlorosulfonated olefin polymer. This insures that free hydroxylic or amino groups are present to react further with polyisocyanate to form the polyurethane or polyurea resin product. The amount of polyisocyanate added is consequently based on the number of equivalents of polyol or polyamine present minus the number of equivalents of sulfur present in the chlorosulfonated olefin polymer. The actual equivalent amount of the polyisocyanate can vary based on the type of polyisocyanate used and the known fact that many polyisocyanates react readily with water in the atmosphere, thus removing some of the polyisocyanate from availability for reaction with the hydroxy or amine functionalities. However, it has been found that at least 5% by weight, based on the weight of the total composition, of the polyisocyanate must be present in order to form the chlorosulfonated olefin polymer compostions of the invention. The amount of chlorosulfonated olefin polymer present can be as high as 80 weight % when high molecular weight polyolefins are utilized, since fewer sulfonyl chloride groups are required to assure at least two sulfur groups per molecule. For the same reasons the amount of polyol or polyamine present in the reactive composition ranges from at least 5% by weight wherein the equivalent ratio of the polyol, or polyamine to sulfur in the chlorosulfonated olefin polymer is greater than 1:1. This insures that there are free hydroxyl or amino groups available for further reaction with the polyisocyanate. Similarly, there must be a sufficient number of isocyanate moieties present to react with the free hydroxyl or amino groups present in the sulfonate or sulfonamide derivative formed by reaction of the chlorosulfonated olefin polymer with polyol or polyamine. Depending on the molecular weights of the polyisocyanate, polyol or polyamine, and the chlorosulfonated olefin polymer this amount will be at least 5% by weight, based on the weight of the resin, and will generally fall within the range of 5-90 % by weight of the total composition.

The chlorosulfonated olefin polymer, polyol, polyamine, or mixture thereof, and the polyisocyanate may be contacted simultaneously to produce a reactive composition which then reacts to form the product polyurethanes or polyureas of the invention. When a polyol alone is used, it is preferred that a tertiary amine be present in amounts of 0.1-2 equivalents per equivalent of sulfur present in the chlorosulfonated olefin polymer, to act as an acid scavenger. The use of a tertiary amine is optional when polyamines or mixtures of polyols and polyamines are used as reactants. The process may be run in the absence or in the presence of an inert solvent such as toluene, xylene, methyl ethyl ketone, or methyl isobutyl ketone, or in the melt at elevated temperatures. The viscosity of the reaction mixture will detemine whether a solvent or elevated temperature is necessary or desirable. The tertiary amine component may function as an acid acceptor for the reaction between the chlorosulfonated olefin polymer and the polyol and as the catalyst for the reaction between the polyol or polyamine and polyisocyanate. Tertiary amines which are preferred for the present invention must be compounds or mixtures of compounds which have a Kb of at least 2x10-9. Suitable tertiary amines include such compounds as trimethylamine, triethylamine, tributylamine, N-methylmorpholine, N-ethylmorpholine, N-cocomorpholine, and 1,4-diazabicyclo-(2,2,2)octane. The preferred tertiary amines used in the present invention are triethylamine and tributylamine.

In another preferred embodiment of the process of the invention, the polyurethane or polyurea compositions may be prepared by first reacting the chlorosulfonated olefin polymer with excess polyol, polyamine, or mixtures thereof to produce a mixture of an intermediate sulfonate or sulfonamide derivative and polyamine. The mixture is then subsequently reacted with a polyisocyanate to form the final polyurethane or polyurea. In this embodiment 10-80% by weight of the chlorosulfonated olefin polymer, based on the total weight of the composition, is reacted with 5-90% by weight of the polyol, polyamine, or mixture thereof, based on the total weight of the composition, wherein the equivalent ratio of the polyol or polyamine to sulfur in the chlorosulfonated olefin polymer is greater than 1:1. The sulfonate or sulfonamide derivative formed is then combined with at least 5% by weight of a polyisocyanate, based on the weight of the total composition, generally 5-90% by weight, based on the weight of the total composition. The amount is selected to correspond to an amount of polyisocyanate about equal to the equivalents of the polyol or polyamine minus the equivalents of the sulfur contained in the chlorosulfonated olefin polymer. When polyurethanes are prepared using this embodiment it is preferable that 0.1-2 equivalents of a tertiary amine per equivalent of sulfur present in the chlorosulfonated olefin, be present during the initial reaction, to act as an acid scavenger. However, when polyamines or mixtures of polyols and polyamines are used to prepare polyureas or mixed polyurethane-polyureas, a tertiary amine need not be present.

In a further embodiment of the invention a portion of the chlorosulfonyl groups present in the chlorosulfonated olefin polymer may be pre-reacted with a derivatizing agent prior to reaction with the polyol or polyamine and the polyisocyanate. Compounds useful for this purpose are primary and secondary monoamines and monohydric alcohols. The primary and secondary amines can be chosen from the classes of aliphatic, alicyclic, and aromatic amines which include methylamine, ethylamine, propylamine, aniline, ethanolamine, diethanolamine and N-methylethanolamine. The monofunctional alcohol derivatizing agents that can be used can include any aliphatic, alicyclic, or aromatic monofunctional alcohol, such as, for example, methanol, ethanol, isopropanol, octanol, benzyl alcohol, or cyclohexanol. Generally, 0.1 to 1 equivalents of derivatizing agent are used per equivalent of sulfur present in the chlorosulfonated olefin polymer. Following reaction of the derivatizing agent with the chlorosulfonated olefin polymer, the resultant composition is further reacted via a combination of substitution and transesterification or transamidation with 5-90% by weight, based on the weight of the total composition, of one of the above-described polyols or polyamines, or mixtures thereof, and at least 5% by weight, generally 5-90% by weight, based on the weight of the total composition of one of the above-described polyisocyanates to form a resin composition of the invention. In cases where a polyol alone rather than a mixture of polyol and polyamine, is present with the polyisocyanate for the final reaction 0.1-2 equivalents, per equivalent of sulfur present in the chlorosulfonated olefin polymer of a tertiary amine is additionally present. The use of a tertiary amine is optional in cases where a polyamine or polyol/polyamine mixture is used in the final reaction. Monohydric alcohols may be used in excess in this embodiment to act both as derivatizing agents and as solvents. In this case the reaction of the chlorosulfonated olefin polymer derivative with polyol or polyamine is totally by transesterification or transamidation.

The compositions of the invention are useful for forming coating compositions, adhesives, thermoset resins, membranes, and reaction injection molded parts.

### EXAMPLES

The examples which follow are submitted to illustrate and not to limit this invention. All parts and percentages are on a weight basis unless otherwise indicated.

### COMPARATIVE EXAMPLE 1

This example illustrates the effect of preparing a polyurethane resin composition in the absence of a chlorosulfonated olefin polymer. 100 g (0.30 equivalents) of a polyester polyol resin (Desmophen® 651 alkyd resin, available from Mobay Chemical Co.) having an equivalent weight of 330, was combined with 4 g of methyl ethyl ketone and 5 g of tributylamine. The mixture was stirred for 15 minutes and then 65.5 g (0.30 equivalents) of a trimer of hexamethylene diisocyanate (Desmodur® N3390 isocyanate, available from Mobay Chemical Co.) having an equivalent weight of 216 was added with agitation. Over the next 2 hours the viscosity of the solution increased from 220 centipoise to 460 centipoise. At this point, several 508 µm (20 mil) draw-downs were made onto Teflon® fluorocarbon resin film. The coatings were allowed to dry and cure at room temperature for a minimum of 7 days. After this time a film sample was extracted with acetone in a Soxhlet extractor for a minimum of 4 hours to determine the weight percent insolubles, which was found to be 79%. The composition of this example, which did not contain a chlorosulfonated olefin polymer, produced a film which was undesirably hard and brittle.

### COMPARATIVE EXAMPLE 2

This example illustrates the effect of preparing a polyurethane resin in the presence of a chlorinated olefin polymer, rather than in the presence of a chlorosulfonated olefin polymer. 100 g of a 60.2% solids solution of chlorinated polyethylene (Cl content 36.4%) in toluene was diluted with 100 g of methyl ethyl ketone. To this solution were added 92.6 g (0.28 equivalents) of a polyester polyol resin (Desmophen® 651 alkyd resin, available from Mobay Chemical Co.) having an equivalent weight of 330 and 9.0 g of tributylamine. The mixture was stirred for several hours and then 60.2 g (0.28 equivalents) of a trimer of hexamethylene diisocyanate (Desmodur® N3390 isocyanate, available from Mobay Chemical Co.) having an equivalent weight of 216 was added. The viscosity was allowed to increase and then several 508 µm (20 mil) draw-downs were made onto Teflon® fluorocarbon resin film. The coatings were allowed to dry and cure at room temperature for a minimum of 7 days. After this time a film sample was extracted with acetone in a Soxhlet extractor for a minimum of 4 hours to determine the weight percent insolubles. The % insolubles, 47.0%, indicated that essentially all of the low molecular weight chlorinated polyolefin had been extracted out of the crosslinked urethane composition.

### EXAMPLE

50 g of a 65 weight percent solids solution of chlorosulfonated polyethylene [chlorine content 44.9%, sulfur content 2.5%, prepared from a polyethylene base resin having a number average molecular weight of 5,000 (AC-6® polyethylene, available from Allied-Signal Corp.)] (0.025 equivalents sulfur) in toluene was mixed with 30 g of methyl ethyl ketone, 1.5 grams of isopropanol (0.025 equivalents) and 4.6 g of tributylamine (0.025 equivalents). The mixture was stirred and allowed to react for a minimum of 15 minutes. Then, 36.1 g of a trimer of hexamethylene diisocyanate (Desmodur® N3390 isocyanate, available from Mobay Chemical Co.) having an equivalent weight of 216 (0.167 equivalents) was added with stirring. There was no detectable increase in viscosity. 10.2 g of isophoronediamine (0.128 equivalents) was added with vigorous stirring. There was an immediate and continual increase in the viscosity of the mixture. A fully crosslinked, polyurea thermoset resin was obtained.

## Claims

1. A chlorosulfonated olefin polymer resin composition comprising the reaction product of:
a) 10-80% by weight, based on the weight of the resin, of a chlorosulfonated olefin polymer having a chlorine content of 20-60% by weight and a sulfur content of 0.5-10% by weight,
wherein the chlorosulfonated olefin polymer is selected from chlorosulfonated homopolymers of C₂-C₈ alpha monoolefins and chlorosulfonated copolymers of ethylene and at least one ethylenically unsaturated monomer selected from C₃-C₁₀ alpha monoolefins,
b) at least 5% by weight, based on the weight of the resin, of a compound selected from
- polyols selected from ethylene glycol, 1,2-propylene glycol, 1,3-propylene glycol, butanediols, pentanediols and trimethylolpropane,
- polyamines selected from isophoronediamine, hexamethylenediamine, ethylenediamine, 1,4-cyclohexane-bis(methylamine), 1,2-diaminopropane, propylenediamine, trimethylhexamethylmethylenediamine, methanediamine, 4,4'-methylenebisaniline, triethylenetetramine, diethylaminopropylamine, diethylenetriamine, and N-aminoethylpiperazine,
- and mixtures thereof,
wherein the equivalent ratio of the compound to sulfur in the chlorosulfonated olefin polymer is greater than 1:1, and
c) at least 5% by weight, based on the weight of the resin, of a polyisocyanate.

2. The resin composition of claim 1, wherein the chlorosulfonated olefin polymer is selected from chlorosulfonated polyethylene, chlorosulfonated polypropylene, and chlorosulfonated copolymers of ethylene with propylene, butene, 3-methyl-1-pentene or octene.

3. The resin composition of claim 1 wherein the chlorosulfonated olefin polymer is chlorosulfonated polyethylene.

4. The resin composition of claim 1, wherein the chlorosulfonated olefin polymer has a chlorine content of 30-50% and a sulfur content of 1-3%.

5. The resin composition of claim 1, wherein the chlorosulfonated olefin polymer has an average molecular weight of 1,000-50,000.

6. A process for preparing a chlorosulfonated olefin polymer resin composition which process comprises contacting:
a) 10-80% by weight, based on the total weight of the composition, of a chlorosulfonated olefin polymer as defined in claim 1 and having a chlorine content of 20-60% by weight and a sulfur content of 0.5-10% by weight; with
b) at least 5% by weight, based on the total weight of the composition, of a compound selected from polyols as defined in claim 1, polyamines as defined in claim 1, and mixtures thereof, wherein the equivalent ratio of the compound to sulfur in the chlorosulfonated olefin polymer is greater than 1:1; and with
c) at least 5% by weight, based on the weight of the total composition, of a polyisocyanate;
wherein said reactants are each present at the initiation of the reaction;
with the proviso that when b) is a polyol alone, 0.1-2 equivalents, per equivalent of sulfur present in the chlorosulfonated olefin polymer, of a tertiary amine is additionally present.

7. The process of claim 6 wherein b) is a polyamine or a polyol/polyamine mixture and 0.1-2 equivalents, per equivalent of sulfur present in the chlorosulfonated olefin polymer, of a tertiary amine is additionally present.

8. The process of claim 6 or 7 wherein a solvent is additionally present.

9. A process for preparing a chlorosulfonated olefin polymer resin composition which process comprises:
1) preparing an intermediate by contacting
a) 10-80% by weight, based on the total weight of the composition, of a chlorosulfonated olefin polymer as defined in claim 1 and having a chlorine content of 20-60% by weight and a sulfur content of 0.5-10% by weight; with
b) at least 5% by weight, based on the total weight of the composition, of a compound selected from polyols as defined in claim 1, polyamines as defined in claim 1, and mixtures thereof, wherein the equivalent ratio of the compound to sulfur in the chlorosulfonated olefin polymer is greater than 1:1, with the proviso that when b) is polyol alone, 0.1-2 equivalents per equivalent of sulfur present in the chlorosulfonated olefin polymer, of a tertiary amine is additionally present in the mixture used to prepare the intermediate of step 1; and
2) further contacting the resultant intermediate with at least 5% by weight, based on the weight of the total composition, of a polyisocyanate.

10. The process of claim 9, wherein b) is a polyamine or a polyol/polyamine mixture and 0.1-2 equivalents per equivalent of sulfur present in the chlorosulfonated olefin polymer, of a tertiary amine is additionally present in the mixture used to prepare the intermediate of step 1.

11. A process for preparing a chlorosulfonated olefin polymer resin composition which comprises:
1) preparing a derivative by contacting:
a) 10-80% by weight, based on the total weight of the composition, of a chlorosulfonated olefin polymer as defined in claim 1 and having a chlorine content of 20-60% by weight and a sulfur content of 0.5-10% by weight; with
b) 0.1-1 equivalent, per equivalent of sulfur present in the chlorosulfonated olefin polymer, of a compound selected from primary amines, secondary amines, monofunctional alcohols, and mixtures thereof; and
2) further contacting the resultant derivative with:
c) at least 5% by weight, based on the total weight of the composition, of a compound selected from polyols as defined in claim 1, polyamines as defined in claim 1, and mixtures thereof, wherein the equivalent ratio of the compound to sulfur in the chlorosulfonated olefin polymer is greater than 1:1; and with
d) at least 5% by weight , based on the weight of the total composition, of a polyisocyanate;
with the proviso that when c) is a polyol alone, 0.1-2 equivalents per equivalent of sulfur present in the chlorosulfonated olefin polymer, of a tertiary amine is additionally present.

12. The process of claim 11 wherein c) is a polyamine or a polyol/polyamine mixture and 0.1-2 equivalents, per equivalent of sulfur present in the chlorosulfonated olefin polymer, of a tertiary amine is additionally present.

## Patentansprüche

1. Chlorsulfonierte Olefinpolymer-Harzzusammensetzung, umfassend das Reaktionsprodukt aus:
a) 10 - 80 Gew.-%, bezogen auf das Gewicht des Harzes, eines chlorsulfonierten Olefinpolymers mit einem Chlorgehalt von 20 - 60 Gew.-% und einem Schwefelgehalt von 0,5 - 10 Gew.-%, wobei das chlorsulfonierte Olefinpolymer aus chlorsulfonierten Homopolymeren von C₂-C₈-α-Monoolefinen und chlorsulfonierten Copolymeren von Ethylen und wenigstens einem ethylenisch ungesättigten Monomer, ausgewählt aus C₃-C₁₀-α-Monoolefinen, ausgewählt ist,
b) wenigstens 5 Gew.-%, bezogen auf das Gewicht des Harzes, einer Verbindung, ausgewählt aus
- Polyolen, ausgewählt aus Ethylenglycol, 1,2-Propylenglycol, 1,3-Propylenglycol, Butandiolen, Pentandiolen und Trimethylolpropan,
- Polyaminen, ausgewählt aus Isophorondiamin, Hexamethylendiamin, Ethylendiamin, 1, 4-Cyclohexanbis-(methylamin), 1,2-Diaminopropan, Propylendiamin, Trimethylhexamethylmethylendiamin, Methandiamin, 4,4'-Methylenbisanilin, Triethylentetramin, Diethylaminopropylamin, Diethylentriamin und N-Aminoethylpiperazin,
- und deren Mischungen,
wobei das Äquivalenzverhältnis der Verbindung zu Schwefel im chlorsulfonierten Olefinpolymer größer als 1 : 1 ist, und
c) wenigstens 5 Gew.-%, bezogen auf das Gewicht des Harzes, eines Polyisocyanats.

2. Harzzusammensetzung nach Anspruch 1, wobei das chlorsulfonierte Olefinpolymer aus chlorsulfoniertem Polyethylen, chlorsulfoniertem Polypropylen und chlorsulfonierten Copolymeren von Ethylen mit Propylen, Buten, 3-Methyl-1-penten oder Octen ausgewählt ist.

3. Harzzusammensetzung nach Anspruch 1, wobei es sich bei dem chlorsulfonierten Olefinpolymer um chlorsulfoniertes Polyethylen handelt.

4. Harzzusammensetzung nach Anspruch 1, wobei das chlorsulfonierte Olefinpolymer einen Chlorgehalt von 30 - 50 % und einen Schwefelgehalt von 1 - 3 % aufweist.

5. Harzzusammensetzung nach Anspruch 1, wobei das chlorsulfonierte Olefinpolymer eine mittlere Molmasse von 1000 bis 50 000 aufweist.

6. Verfahren zur Herstellung einer chlorsulfonierten Olefinpolymer-Harzzusammensetzung, wobei das Verfahren das In-Berührung-Bringen von:
a) 10 - 80 Gew.-%, bezogen auf das Gesamtgewicht der Zusammensetzung, eines chlorsulfonierten, in Anspruch 1 definierten Olefinpolymers mit einem Chlorgehalt von 20 - 60 Gew.-% und einem Schwefelgehalt von 0,5 - 10 Gew.-% mit
b) wenigstens 5 Gew.-%, bezogen auf das Gesamtgewicht der Zusammensetzung, einer Verbindung, ausgewählt aus in Anspruch 1 definierten Polyolen, in Anspruch 1 definierten Polyaminen und deren Mischungen, wobei das Äquivalenzverhältnis der Verbindung zu Schwefel im chlorsulfonierten Olefinpolymer größer als 1 : 1 ist; und mit
c) wenigstens 5 Gew.-%, bezogen auf das Gewicht der gesamten Zusammensetzung, eines Polyisocyanats;
umfaßt, wobei jeder der Reaktanden bei der Initiierung der Reaktion vorhanden ist; mit der Maßgabe, daß, wenn es sich bei b) ausschließlich um ein Polyol handelt, außerdem 0,1 - 2 Äquivalente pro Äquivalent des im chlorsulfonierten Olefinpolymers vorhandenen Schwefels eines tertiären Amins vorhanden sind.

7. Verfahren nach Anspruch 6, wobei es sich bei b) um ein Polyamin oder eine Polyol-/Polyamin-Mischung handelt und außerdem 0,1 - 2 Äquivalente pro Äquivalent des im chlorsulfonierten Olefinpolymers vorhandenen Schwefels eines tertiären Amins vorhanden sind.

8. Verfahren nach Anspruch 6 oder 7, wobei außerdem ein Lösungsmittel vorhanden ist.

9. Verfahren zur Herstellung einer chlorsulfonierten Olefinpolymer-Harzzusammensetzung, wobei das Verfahren:
1) das Herstellen einer Zwischenstufe durch das In-Berührung-Bringen von
a) 10 - 80 Gew.-%, bezogen auf das Gesamtgewicht der Zusammensetzung, eines chlorsulfonierten, in Anspruch 1 definierten Olefinpolymers mit einem Chlorgehalt von 20 - 60 Gew.-% und einem Schwefelgehalt von 0,5 - 10 Gew.-% mit
b) wenigstens 5 Gew.-%, bezogen auf das Gesamtgewicht der Zusammensetzung, einer Verbindung, ausgewählt aus in Anspruch 1 definierten Polyolen, in Anspruch 1 definierten Polyaminen und deren Mischungen, wobei das Äquivalenzverhältnis der Verbindung zu Schwefel im chlorsulfonierten Olefinpolymer größer als 1 : 1 ist; mit der Maßgabe, daß, wenn es sich bei b) ausschließlich um ein Polyol handelt, außerdem 0,1 - 2 Äquivalente pro Äquivalent des im chlorsulfonierten Olefinpolymers vorhandenen Schwefels eines tertiären Amins in der zur Herstellung der Zwischenstufe von Schritt 1 verwendeten Mischung vorhanden sind; und
2) weiterhin das In-Berührung-Bringen der resultierenden Zwischenstufe mit wenigstens 5 Gew.-%, bezogen auf das Gewicht der gesamten Zusammensetzung, eines Polyisocyanats,
umfaßt.

10. Verfahren nach Anspruch 9, wobei es sich bei b) um ein Polyamin oder eine Polyol-/Polyamin-Mischung handelt und außerdem 0,1 - 2 Äquivalente pro Äquivalent des im chlorsulfonierten Olefinpolymers vorhandenen Schwefels eines tertiären Amins in der zur Herstellung der Zwischenstufe von Schritt 1 verwendeten Mischung vorhanden sind.

11. Verfahren zur Herstellung einer chlorsulfonierten Olefinpolymer-Harzzusammensetzung, umfassend:
1) Herstellen eines Derivats durch das In-Berührung-Bringen von:
a) 10 - 80 Gew.-%, bezogen auf das Gesamtgewicht der Zusammensetzung, eines chlorsulfonierten, in Anspruch 1 definierten Olefinpolymers mit einem Chlorgehalt von 20 - 60 Gew.-% und einem Schwefelgehalt von 0,5 - 10 Gew.-% mit
b) 0,1 - 2 Äquivalenten pro Äquivalent des im chlorsulfonierten Olefinpolymers vorhandenen Schwefels einer Verbindung, die aus primären Aminen, sekundären Aminen, monofunktionellen Alkoholen und deren Mischungen ausgewählt ist; und
2) weiterhin das In-Berührung-Bringen des resultierenden Derivats mit:
c) wenigstens 5 Gew.-%, bezogen auf das Gesamtgewicht der Zusammensetzung, einer Verbindung, die aus in Anspruch 1 definierten Polyolen, aus in Anspruch 1 definierten Polyaminen und deren Mischungen ausgewählt ist, wobei das Äquivalenzverhältnis der Verbindung zum Schwefel im chlorsulfonierten Olefinpolymer höher als 1 : 1 ist; und mit
d) wenigstens 5 Gew.-%, bezogen auf das Gewicht der gesamten Zusammensetzung, eines Polyisocyanats; mit der Maßgabe, daß, wenn c) ausschließlich ein Polyol ist, außerdem 0,1 - 2 Äquivalente pro Äquivalent des im chlorsulfonierten Olefinpolymers vorhandenen Schwefels eines tertiären Amins vorhanden sind.

12. Verfahren nach Anspruch 1, wobei es sich bei c) um ein Polyamin oder eine Polyol-/Polyamin-Mischung handelt und außerdem 0,1 - 2 Äquivalente pro Äquivalent des im chlorsulfonierten Olefinpolymers vorhandenen Schwefels eines tertiären Amins vorhanden sind.

## Revendications

1. Composition de résine de polymère d'oléfines chlorosulfoné comprenant le produit de réaction de :
a) 10 à 80 % en poids, sur la base du poids de la résine, d'un polymère d'oléfines chlorosulfoné ayant une teneur en chlore de 20 à 60 % en poids et une teneur en soufre de 0,5 à 10 % en poids, le polymère d'oléfines chlorosulfoné étant choisi parmi les homopolymères chlorosulfonés d'alpha-monooléfines en C₂ à C₈ et les copolymères chlorosulfonés d'éthylène et d'au moins un monomère éthyléniquement insaturé choisi parmi les alpha-monooléfines en C₃ à C₁₀,
b) au moins 5 % en poids, sur la base du poids de la résine, d'un composé choisi parmi
- les polyols choisis parmi l'éthylèneglycol, le 1,2-propylèneglycol, le 1,3-propylèneglycol, les butanediols, les pentanediols et le triméthylolpropane,
- les polyamines choisies parmi l'isophoronediamine, l'hexaméthylènediamine, l'éthylènediamine, la 1,4-cyclohexane-bis(méthylamine), le 1,2-diaminopropane, la propylènediamine, la triméthylhexaméthylméthylènediamine, la méthanediamine, la 4,4'-méthylènebisaniline, la triéthylènetétramine, la diéthylaminopropylamine, la diéthylènetriamine et la N-aminoéthylpipérazine,
- et les mélanges de ceux-ci,
le rapport équivalent du composé au soufre dans le polymère d'oléfines chlorosulfoné étant supérieur à 1:1, et
c) au moins 5 % en poids, sur la base du poids de la résine, d'un polyisocyanate.

2. Composition de résine selon la revendication 1, dans laquelle le polymère d'oléfines chlorosulfoné est choisi parmi un polyéthylène chlorosulfoné, un polypropylène chlorosulfoné et les copolymères chlorosulfonés d'éthylène avec du propylène, du butène, du 3-méthyl-1-pentène ou de l'octène.

3. Composition de résine selon la revendication 1, dans laquelle le polymère d'oléfines chlorosulfoné est un polyéthylène chlorosulfoné.

4. Composition de résine selon la revendication 1, dans laquelle le polymère d'oléfines chlorosulfoné a une teneur en chlore de 30 à 50 % et une teneur en soufre de 1 à 3 %.

5. Composition de résine selon la revendication 1, dans laquelle le polymère d'oléfines chlorosulfoné a un poids moléculaire moyen de 1 000 à 50 000.

6. Procédé de préparation d'une composition de résine de polymère d'oléfines chlorosulfoné, ce procédé comprenant la mise en contact de :
a) 10 à 80 % en poids, sur la base du poids total de la composition, d'un polymère d'oléfines chlorosulfoné tel que défini dans la revendication 1 et ayant une teneur en chlore de 20 à 60 % en poids et une teneur en soufre de 0,5 à 10 % en poids ; avec
b) au moins 5 % en poids, sur la base du poids total de la composition, d'un composé choisi parmi les polyols tels que définis dans la revendication 1, les polyamines telles que définies dans la revendication 1 et les mélanges de ceux-ci, le rapport équivalent du composé au soufre dans le polymère d'oléfines chlorosulfoné étant supérieur à 1:1 ; et avec
c) au moins 5 % en poids, sur la base du poids de la composition totale, d'un polyisocyanate ;
dans lequel lesdits réactifs sont chacun présents au début de la réaction ; avec la condition que lorsque b) est un polyol seul, 0,1 à 2 équivalents, par équivalent de soufre présent dans le polymère d'oléfines chlorosulfoné, d'une amine tertiaire soient présents en plus.

7. Procédé selon la revendication 6, dans lequel b) est une polyamine ou un mélange polyol/polyamine, et 0,1 à 2 équivalents, par équivalent de soufre présent dans le polymère d'oléfines chlorosulfoné, d'une amine tertiaire sont présents en plus.

8. Procédé selon la revendication 6 ou 7, dans lequel un solvant est présent en plus.

9. Procédé de préparation d'une composition de résine de polymère d'oléfines chlorosulfoné, ce procédé comprenant
1) la préparation d'un produit intermédiaire par la mise en contact de
a) 10 à 80 % en poids, sur la base du poids total de la composition, d'un polymère d'oléfines chlorosulfoné tel que défini dans la revendication 1 et ayant une teneur en chlore de 20 à 60 % en poids et une teneur en soufre de 0,5 à 10 % en poids ; avec
b) au moins 5 % en poids, sur la base du poids total de la composition, d'un composé choisi parmi les polyols tels que définis dans la revendication 1, les polyamines telles que définies dans la revendication 1 et les mélanges de ceux-ci, le rapport équivalent du composé au soufre dans le polymère d'oléfines chlorosulfoné étant supérieur à 1:1, avec la condition que lorsque b) est un polyol seul, 0,1 à 2 équivalents, par équivalent de soufre présent dans le polymère d'oléfines chlorosulfoné, d'une amine tertiaire soient présents en plus dans le mélange utilisé pour préparer le produit intermédiaire de l'étape 1) ; et
2) ensuite, la mise en contact du produit intermédiaire résultant avec au moins 5 % en poids, sur la base du poids de la composition totale, d'un polyisocyanate.

10. Procédé selon la revendication 9, dans lequel b) est une polyamine ou un mélange polyol/polyamine, et 0,1 à 2 équivalents, par équivalent de soufre présent dans le polymère d'oléfines chlorosulfoné, d'une amine tertiaire sont présents en plus dans le mélange utilisé pour préparer le produit intermédiaire de l'étape 1.

11. Procédé de préparation d'une composition de résine de polymère d'oléfines chlorosulfoné, qui comprend :
1) la préparation d'un dérivé par la mise en contact de :
a) 10 à 80 % en poids, sur la base du poids total de la composition, d'un polymère d'oléfines chlorosulfoné tel que défini dans la revendication 1 et ayant une teneur en chlore de 20 à 60 % en poids et une teneur en soufre de 0,5 à 10 % en poids ; avec
b) 0,1 à 1 équivalent, par équivalent de soufre présent dans le polymère d'oléfines chlorosulfoné, d'un composé choisi parmi les amines primaires, les amines secondaires, les alcools monofonctionnels et les mélanges de ceux-ci ; et
2) ensuite, la mise en contact du dérivé résultant avec :
c) au moins 5 % en poids, sur la base du poids total de la composition, d'un composé choisi parmi les polyols tels que définis dans la revendication 1, les polyamines telles que définies dans la revendication 1 et les mélanges de ceux-ci, le rapport équivalent du composé au soufre dans le polymère d'oléfines chlorosulfoné étant supérieur à 1:1 ; et avec
d) au moins 5 % en poids, sur la base du poids de la composition totale, d'un polyisocyanate ;
avec la condition que lorsque c) est un polyol seul, 0,1 à 2 équivalents, par équivalent de soufre présent dans le polymère d'oléfines chlorosulfoné, d'une amine tertiaire soient présents en plus.

12. Procédé selon la revendication 11, dans lequel c) est une polyamine ou un mélange polyol/polyamine, et 0,1 à 2 équivalents, par équivalent de soufre présent dans le polymère d'oléfines chlorosulfoné, d'une amine tertiaire sont présents en plus.
